# EUROPÄISCHE PATENTSCHRIFT

(11) **EP 0 680 867 B1**
(45) Veröffentlichungstag und Bekanntmachung des Hinweises auf die Patenterteilung: **23.10.1996**
(21) Anmeldenummer: 95106245.4
(22) Anmeldetag: 26.04.1995
(51) Int. Cl.: B62D 25/18

(54) **Schmutzfänger für Kraftfahrzeuge**
Mudflap for vehicles
Bavette de garde-boue pour véhicules

(30) Priorität: 04.05.1994 DE 4415648
(43) Veröffentlichungstag der Anmeldung: 08.11.1995
(73) Patentinhaber: WEGU Gummi- und Kunststoffwerke Walter Dräbing KG, D-34123 Kassel (DE)
(72) Erfinder: Lehn, Friedrich, D-34123 Kassel (DE)
(74) Vertreter: Rehberg, Elmar, Dipl.-Ing.

(56) Entgegenhaltungen:
- EP-A- 0 401 659
- DE-A- 3 532 985
- FR-A- 2 410 591

## Beschreibung

Die Erfindung bezieht sich auf einen Schmutzfänger für Kraftfahrzeuge, mit einem Lappenhauptkörper aus elastischem Material, an dem ein Anpassungsansatz gebildet ist, an dessen Rand ein Metallstreifen befestigt ist, an dem zwei im Abstand voneinander angeordnete, sich etwa rechtwinklig zur Hauptrichtung des Metallstreifens erstreckende Klemmteile ausgeformt sind, denen den Kotflügelfalz hintergreifende Klammerteile zugeordnet sind, wobei für jede Befestigungsstelle aus Klemmteil und Klammerteil eine das Klemmteil in einer Durchbrechung durchsetzende und in ein Gegengewinde im Klammerteil eingreifende Schraube zur klemmenden Halterung des Schmutzfängers am Kotflügelfalz vorgesehen ist. Kraftfahrzeuge weisen bekanntlich im Bereich jedes Radhauses einen Kotflügelfalz auf, der als dreidimensional gekrümmte abgewinkelte Kante der Karosserie ausgebildet ist, die sich von außen nach innen am Fahrzeug frei endend erstreckt. Die verschiedenen Fahrzeuge weisen unterschiedlich gekrümmte Kotflügelfalze auf. Universalschmutzfänger sind so ausgebildet, daß sie eine Anpassung und Befestigung an unterschiedlich gekrümmten Kotflügelfalzen zulassen.

Ein Schmutzfänger der eingangs beschriebenen Art ist aus der EP 0 401 659 B1 bekannt. Mit dem bogenförmig verlaufenden Rand des Anpassungsansatzes, der nach unten in den Lappenhauptkörper übergeht, ist ein Metallstreifen fest verbunden, beispielsweise vernietet, der eine plastische Verbiegung und damit Anpassung an die Krümmung des jeweiligen Kotflügelfalzes ermöglicht. Einteilig mit dem Metallstreifen sind an diesem zwei Klemmteile ausgeformt, die in der Ebene des Metallstreifens angeordnet sind und sich etwa rechtwinklig zur Hauptrichtung des Metallstreifens abstehend erstrecken. Diese Klemmteile besitzen an ihrem freien, dem Radhaus Zugekehrten Ende eine etwa rechtwinklige Abwinklung. Sie weisen desweiteren je eine Durchbrechung für den Durchtritt einer Schraube auf. Den beiden Klemmteilen ist eine Klammer zugeordnet, die funktionsmäßig zwei Klammerteile bildet, die in Verbindung mit ihrer einstückigen Ausbildung und durch die Anordnung je einer Schraube an jeder Befestigungsstelle verdrehgesichert gehalten ist. Auch die Klammerteile besitzen in ihrem freien Endbereich in Richtung auf die Klemmteile abgewinkelte Enden, mit denen sie sich in der Befestigungsstellung an den Klemmteilen abstützen. Diese Klammerteile hintergreifen den Kotflügelfalz. Da der Blechstreifen bei der Anpassung des Anpassungsansatzes an die dreidimensionale Krümmung des Kotflügelfalzes plastisch verbogen werden muß, darf er nicht zu dickwandig ausgebildet sein. Er besteht also aus einem relativ dünnen Metallblech, welches als Stanzteil ausgebildet sein kann. Die daran befindlichen abstehenden Klemmteile weisen demzufolge gleiche Wandstärke wie der Blechstreifen auf. Dies reicht jedoch in der Regel nicht aus, um ausreichende Klemmkräfte aufbringen zu können. Nur wenn der Blechstreifen und die Klemmteile eine Dicke von mindestens etwa 3 mm aufweist, ist eine dauerhaft klemmende Befestigung möglich. Dann aber bereitet das Verbiegen und Anpassen des Blechstreifens Schwierigkeiten. Dieser läßt sich nicht mehr bzw. nur sehr schwer manuell biegen, zumal der Blechstreifen eine erhebliche Breite aufweisen muß. Das Verbiegen und Anpassen des Blechstreifens ist jedoch unentbehrlich, wenn verschiedene Winkelstellungen des Kotflügelfalzes zum Kotflügel mit einem solchen Universalschmutzfänger ausgeglichen werden müssen. Um diesem aufgezeigten Problem zu begegnen, werden die Klemmteile nicht einstückig mit dem Metallstreifen ausgeformt, sondern als separates Stanzteil ausgebildet, so daß die Klemmteile eine größere Dicke als der vergleichsweise dünnere Metallstreifen aufweisen. Bei dieser mehrteiligen Ausbildung sind dann aber wiederum die Klemmteile in der befestigten Stellung des Schmutzfängers nur durch Reibkräfte an dem Metallstreifen gehalten. Weiterhin ist dann nachteilig, daß die Befestigungsstellen relativ zum Blechstreifen und damit zum Anpassungsansatz nicht unverrückbar feststehen, sondern vom Benutzer des Schmutzfängers auch in ungünstiger Relativlage eingesetzt werden können.

Der Erfindung liegt die Aufgabe zugrunde, einen Universalschmutzfänger der eingangs beschriebenen Art bereitzustellen, bei dem bei einstückiger Ausformung des Metallstreifens und der Klemmteile der Metallstreifen bei seiner individuellen Anpassung an den Verlauf des Kotflügelfalzes manuell leicht verbiegbar ist und andererseits dennoch über die angeformten Klemmteile ausreichende Klemmkräfte von den Klemmteilen ohne plastische Deformation aufgenommen werden können.

Erfindungsgemäß wird dies bei dem Schmutzfänger der eingangs beschriebenen Art dadurch erreicht, daß der Metallstreifen zur Bildung jedes Klemmteiles mit einem U-förmigen Querschnitt vierfach abgewinkelt ist, daß das rechtwinklig zur Hauptrichtung des Metallstreifens vorstehende Teil des Klemmteils den U-förmigen Querschnitt fortsetzend zwei frei endende Schenkel aufweist, und daS das Klammerteil an seinem dem Kotflügelfalz abgekehrten Ende einen zwischen die Schenkel des Klemmteils verdrehgesichert eingreifenden und sich am Grund des Klemmteils abstützenden umgebogenen Fortsatz aufweist.

Die Erfindung geht von dem Gedanken aus, einen Blechstreifen mit einer vergleichsweise geringen Dicke einzusetzen, so daß er sich beim Anpassen des Anpassungsansatzes manuell leicht verbiegen läßt. Dieser Blechstreifen ist zur Ausbildung bzw. Ausformung der Klemmteile jedoch gehäuseartig vierfach abgewinkelt, so daß jedes Klemmteil gleichsam ein gehäuseartiges Aussehen erhält. Jedes Klemmteil weist im Querschnitt senkrecht zu seiner Haupterstreckungsrichtung, also rechtwinklig zur Hauptrichtung des Metallstreifens einen U-förmigen Querschnitt mit zwei Schwenkeln auf, die sich von dem Grund des U-förmigen Querschnittes etwa rechtwinklig abstehend erstrecken. Im Bereich des Blechstreifens gehen diese Schenkel in den Blechstreifen über. Im überstehenden Bereich der Klemmteile enden diese Schenkel frei. Diese gehäuseartige Ausbildung weist durch die Mehrfachabwinklung eine erhebliche Steifheit auf, obwohl die Dicke des Materials im Bereich der Klemmteile mit der vergleichsweise geringen Dicke des Metallstreifens übereinstimmt. Die Herstellung des Metallstreifens mit den ausgeformten Klemmteilen ist vergleichsweise einfach durch einen Stanz- und Biegevorgang möglich. Da der Metallstreifen am Anpassungsansatz herstellerseitig befestigt wird, liegen auch die beiden Befestigungsstellen unverrückbar in einer günstigen Relativlage fest. Jedem Klemmteil ist ein Klammerteil und eine Schraube zugeordnet. Das Klammerteil greift mit einem Fortsatz in das Klemmteil ein, und zwar zwischen die Schenkel, so daS jedes Klemmteil in Verbindung mit der Schraube, die die Durchbrechung am Klammerteil durchsetzt, einzeln verdrehgesichert gehalten ist. Es besteht keine Gefahr, daß sich bei der Montage des Schmutzfängers beim Anziehen der einen Schraube die andere Befestigungsstelle verlagert.

Der Fortsatz am Klammerteil kann etwa V-förmig ausgebildet sein und einen frei endenden Betätigungsschenkel aufweisen. Dieser Betätigungsschenkel erstreckt sich von dem Klemmteil weg. Er ermöglicht es, mit dem Finger einer Hand betätigt zu werden. In der einen Richtung kann das Klammerteil in eine winklige Öffnungsstellung zum Klemmteil verbracht werden. In der anderen Stellung kann das Klammerteil mit seinem dem Kotflügelfalz zugekehrten freien Ende den Kotflügelfalz hintergreifend in die gewünschte Klemmposition verschoben werden. Bei diesen Betätigungen kippt das Klammerteil mit dem Grund seiner V-förmigen Ausbildung in dem U-förmigen Querschnitt des Klemmteils, so daß damit gleichsam eine Schwenkachse für das Klammerteil gebildet wird.

Das Klemmteil kann einen den Grund des U-förmigen Querschnitts bildenden Mittelteil aufweisen, der sich in einer beabstandet zu der Haupterstreckungsebene des Metallstreifens befindlichen Ebene erstreckt. Dieser Mittelteil geht gerade und eben durch. Seine von ihm aufgespannte Ebene muß nicht unbedingt parallel zur Haupterstreckungsebene des Metallstreifens verlaufen. Auch eine geneigte Relativlage ist möglich. Der Mittelteil weist eine insbesondere langlochartige Durchbrechung auf, die durch ihre Ausbildung und Anordnung den Verschiebebereich des Klammerteils gegenüber dem Klemmteil festlegt. Die Durchbrechung für die Schraube im Mittelteil des Klemmteils ist somit als Langloch ausgebildet, das sich etwa rechtwinklig zur Haupterstreckungsrichtung des Metallstreifens erstreckt.

Das Klammerteil kann an seinem dem Kotflügelfalz zugekehrten Endbereich quer zur Hauptrichtung des Metallstreifens abgerundete Form aufweisen, damit beim Anziehen der Schraube in der Klemmstellung eine punkt- oder linienförmige Berührung zwischen Klammerteil und Kotflügelfalz stattfindet, wie es für einen sicheren unverrückbaren Sitz erforderlich ist.

Durch die im Querschnitt U-förmige Ausbildung der Klemmteile stehen diese insbesondere mit ihren rechtwinklig zur Hauptrichtung des Metallstreifens vorstehenden Bereichen weiter in Richtung auf die Lauffläche des Rades vor als bei solchen Konstruktionen, bei denen die Klemmteile und der Blechstreifen in einer Ebene angeordnet sind. Dies kann in manchen Fällen, z. B. bei einer Schneekettenmontage, hinderlich sein. Um dem entgegenzuwirken, kann der Rand des Anpassungsansatzes Vorsprünge aufweisen, die einen Winkel für die Befestigung des Metallstreifens bilden. Dabei ist der Winkel so gerichtet, daß die freien Enden der Klemmteile zu der Lauffläche des Rades in einen vergleichsweise größeren Abstand gelangen und trotzdem eine sichere klemmende Befestigung des Universalschmutzfängers am Kotflügelfalz möglich ist. Die gleiche Wirkung ist aber auch dadurch erzielbar, daß die vier Abwinklungen zur Bildung jedes Klemmteils nicht parallel zueinander, sondern derart winklig verlaufen, daß das Mittelteil jedes Klemmteiles etwa in die gleiche Relativlage kommt, wie es auch bei Anordnung der Vorsprünge am Anpassungsansatz geschieht. Das Klemmteil weist dann rechtwinklig zur Hauptrichtung des Metallstreifens im Bereich des Metallstreifens eine abnehmende Höhe der Schenkel auf, so daß sein Mittelteil mit der von ihm aufgespannten Ebene die winklige Lage zu der Haupterstreckungsebene des Metallstreifens einnimmt.

Das Klammerteil kann mit seinem dem Kotflügelfalz zugekehrten Endbereich zum Ausgleich des durch die Vorsprünge oder die Abwinklungen gebildeten Winkels abgewinkelt sein, während das Mittelteil des Klemmteiles in allen Fällen eben durchgehend ausgebildet ist.

Das Klemmteil kann in seinem rechtwinklig zur Hauptrichtung des Metallstreifens vorgesehenen Bereich eine zunehmende Höhe seiner Schenkel aufweisen, so daß insbesondere dort, wo sich der Grund der V-förmigen Ausbildung des Klammerteils abstützt, eine verdrehgesicherte Lage auch dann ergibt, wenn die Schraube relativ weit gelöst ist. Die Klammerteile sind durch den U-förmigen Querschnitt des Klemmteils und die das Klemmteil durchsetzende Schraube auch in der gelösten Stellung bereits sicher und unverlierbar gehalten, wodurch die Montage des Schmutzfängers am Kotflügelfalz erleichtert wird.

Die Erfindung wird anhand bevorzugter Ausführungsbeispiele weiter erläutert und beschrieben. Es zeigen:
- Figur 1: eine perspektivische Darstellung eines rechten Schmutzfängers in seiner Relativlage zum Kotflügelfalz, jedoch ohne Klammerteile und Schrauben,
- Figur 2: eine Ansicht an einer Befestigungsstelle aus Klemmteil und Klammerteil in der montierten Stellung,
- Figur 3: eine Ansicht zwischen Klemmteil und Klammerteil,
- Figur 4: eine ähnliche Darstellung wie Figur 2, jedoch bei einer anderen Ausführungsform,
- Figur 5: die Befestigungsstelle des Ausführungsbeispiels gemäß Figur 2 in der winkligen Öffnungsstellung,
- Figur 6: einen Schnitt gemäß der Linie VI-VI in Figur 5 und
- Figur 7: die Befestigungsstelle gemäß den Figuren 2 bzw. 5 in der Klemmstellung.

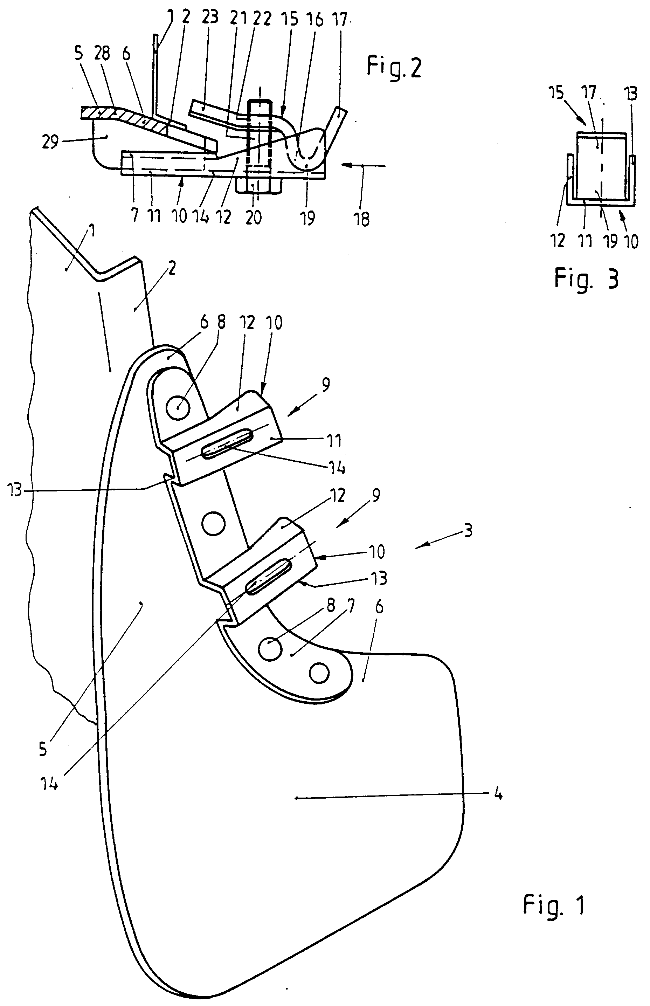

In Figur 1 ist ein rechter Kotflügel 1 mit seinem Kotflügelfalz 2 dargestellt, der sich in Richtung auf das Radgehäuse abgewinkelter Lage befindet. An diesem Kotflügelfalz 2 wird der Schmutzfänger 3 befestigt. Der Schmutzfänger 3 weist einen Lappenhauptkörper 4 aus elastischem Material, insbesondere Gummi, Kunststoff o. dgl. auf, der in seinem oberen Bereich in einen Anpassungsansatz 5 übergeht. Dieser Anpassungsansatz 5 besitzt entsprechend dem durchschnittlichen Verlauf vieler Kotflügelfalze 2 unterschiedlicher Kraftfahrzeuge einen bogenförmig verlaufenden Rand 6, an dem ein ebenfalls bogenförmig verlaufender Metallstreifen 7 befestigt ist. Zur Befestigung können Niete 8 eingesetzt werden. Der Metallstreifen 7 besitzt eine bumerangähnliche gekrümmte Form. Er weist eine gewisse Breite auf, und seine Dicke beträgt etwa 2 mm. Es sind zwei Befestigungsstellen 9 vorgesehen, deren relative Lage zum Metallstreifen 7 und damit zum Anpassungsansatz 5 festliegt. Wesentlicher Bestandteil jeder Befestigungsstelle 9 ist ein Klemmteil 10, welches einstückig mit dem Metallstreifen ausgebildet ist. Es kann sich um ein Stanz- und Biegeteil handeln. Zur Realisierung jedes Klemmteiles 10 ist der Metallstreifen 7 im Bereich jeder Befestigungsstelle 9 vierfach abgewinkelt, wie dargestellt, so daß das Klemmteil 10 sich teilweise im Bereich der Hauptrichtung des Metallstreifens 7 erstreckt und teilweise rechtwinklig zu dieser Hauptrichtung des Metallstreifens 7 in Richtung auf das Innere des Radgehäuses frei übersteht. Das Klemmteil 10 weist einen Mittelteil 11 auf, von dem sich zwei Schenkel 12 und 13 etwa rechtwinklig abstehend erstrecken. Im Bereich des Metallstreifens 7 gehen die Schenkel 12 und 13 in den Metallstreifen über. Im überstehenden Bereich des Klemmteils 11 enden die Schenkel 12 und 13 frei. Jedes Klemmteil 10 weist somit etwa U-förmigen Querschnitt quer zu seiner Haupterstreckungsrichtung auf, wobei der Grund des U-förmigen Querschnittes von dem Mittelteil und die beiden Seitenwandungen von den Schenkeln 12 und 13 gebildet werden. Im Bereich des Mittelteils 11 ist eine langlochartige Durchbrechung 14 vorgesehen. Die vier Abwinklungen des Metallstreifens an jeder Befestigungsstelle 9 verlaufen parallel zueinander, so daß das Mittelteil 11 des Klemmteiles 10 sich in einer Ebene erstreckt, die parallel zur Haupterstreckungsebene des Blechstreifens 7 ist.

Wie Figur 2 zu erkennen gibt, ist an jeder Befestigungsstelle 9 jedem Klemmteil 10 ein Klammerteil 15 zugeordnet. Das Klammerteil 15 weist an seinem dem Kotflügelfalz 2 abgekehrten Ende einen V-förmig ausgebildeten Fortsatz 16 auf, der in einen frei endenden Betätigungsschenkel 17 übergeht. Der Klammerteil 15 weist zumindest im Bereich seines Fortsatzes 16 eine etwas geringere Breite auf, als es dem Abstand der Schenkel 12 und 13 des Klemmteils 10 voneinander entspricht. Figur 3 zeigt eine Ansicht der Verhältnisse in Richtung des Pfeiles 18 in Figur 2. Man erkennt, wie sich der Grund 19 des V-förmigen Fortsatzes 16 verdrehgesichert innerhalb des Freiraumes zwischen Mittelteil 11 und den Schenkeln 12 und 13 des Klemmteiles 10 bewegen kann, wobei das Klammerteil 15 gleichsam auf dem Grund 19 des Fortsatzes abrollt und damit gleichsam um eine wandernde Achse verschwenkbar ist.

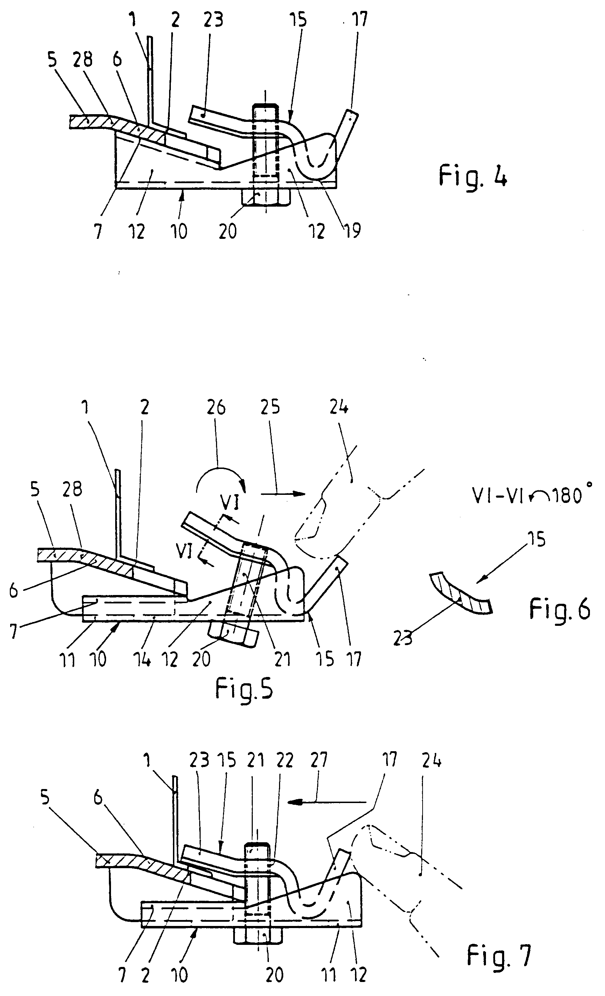

Eine Schraube 20 durchsetzt mit ihrem Gewindeschaft 21 die Durchbrechung 14 im Mittelteil 11 des Klemmteiles. Sie greift in ein Gegengewinde 22 im Mittelbereich des Klammerteils 15 ein. Die Schraube 20 dient der Aufbringung der Klemmkraft an jeder Befestigungsstelle 9. Das Klammerteil 15 weist an seinem dem Kotflügelfalz 2 zugekehrten Endbereich 23 eine abgekantete oder abgerundete Form auf, wie dies insbesondere anhand der Figuren 5 und 6 ersichtlich ist. Diese Form dient der punkt- oder linienförmigen Berührung bzw. Abstützung des Klammerteils 15 in der befestigten Stellung.

Die Betätigungsmöglichkeiten des Klammerteils 15 relativ zum Klemmteil 10 über den Betätigungsschenkel 17 sind aus den Figuren 5 und 7 entnehmbar. Mit einem Finger 24 einer Hand kann der Betätigungsschenkel 17 des Klammerteils 15 hintergriffen (Figur 5) werden, wodurch das Klammerteil 15 in Richtung eines Pfeiles 25 verschoben und dabei in Richtung eines Pfeiles 26 so weit verschwenkt wird, wie es die Erstreckung der langlochartigen Durchbrechung 14 sowie der Einschraubzustand der Schraube 20 in das Gegengewinde 22 zuläßt. Das Klammerteil 15 erreicht somit die in Figur 5 dargestellte winklige Öffnungslage. Nach dem Anpassen des Metallstreifens 7 entsprechend der Krümmung des Kotflügelfalzes 2 wird der Finger 24, wie in Figur 7 dargestellt, unter Druckanwendung auf den Betätigungsschenkel 17 gemäß Pfeil 27 zur Einwirkung gebracht, wobei das Klammerteil 15 in Richtung auf den Kotflügelfalz 2 verschoben und verschwenkt wird, bis der vordere Endbereich 23 des Klammerteils 15 den Kotflügelfalz 2 hintergreift und mit seinem vorderen Ende die Abwinklung zwischen Kotflügelfalz 2 und Kotflügel 1 erreicht. Dabei hat sich gleichzeitig die Schraube 20 mit ihrem Gewindeschaft 21 im Bereich der langlochartigen Durchbrechung 14 verschoben. Die Schraube 20 wird durch das Klammerteil 15 gehalten und kann mit einem Verdrehwerkzeug, welches mit der anderen Hand gehandhabt wird, angezogen werden. Die Endstellung ist in Figur 7 dargestellt.

Bei dem Ausführungsbeispiel der Figuren 2, 3, 5, 6 und 7 besitzt der Anpassungsansatz 5 im Bereich seines Randes 6 eine Abwinklung 28, so daß sich der Rand 6 winklig zu der Haupterstreckungsebene des Anpassungsansatzes 5 erstreckt. Damit kommt der Rand 6 in eine Relativlage, die parallel zu dem Kotflügelfalz 2 verläuft, während andererseits der Anpassungsansatz 5 und der Lappenhauptkörper 4 eine Relativlage senkrecht zur Fahrtrichtung des Kraftfahrzeuges einnehmen. Um das von dem Fahrzeugrad aufgespritzte Wasser in das Innere des Radgehäuses abzuleiten, kann hier auch ein kleiner Winkel gebildet sein. Um aber bei dieser Ausgangssituation die nach innen in das Radgehäuse und damit rechtwinklig von der Hauptrichtung des Metallstreifens 7 abstehenden Teile der Klemmteile 10 an einer Stelle anzuordnen, an der sie eine möglichst große Entfernung zu der Lauffläche des Rades aufweisen, ist der Anpassungsansatz 5 im Bereich des Randes 6 mit Vorsprüngen 29 versehen, die in einer Mehrzahl angeordnet sind, wie es für die Abstützung des Metallstreifens 7 erforderlich ist. Hierdurch kommen der Mittelteil 11 des Klemmteiles 10 und der Metallstreifen 7 selbst in eine besondere Relativlage zu dem Anpassungsansatz 5 und dem Kotflügelfalz 2, die sicherstellt, daß eine Berührung der Lauffläche des Rades durch den Kopf der Schraube 20 auch bei größten Einfederbewegungen mit Sicherheit vermieden wird und im übrigen noch genügend Sicherheit vorhanden ist, um z. B. eine Schneekettenmontage zu ermöglichen. Eine ähnlich günstige Winkellage kann aber auch dann erreicht werden, wenn die Vorsprünge 29 nicht vorhanden sind. Figur 4 zeigt eine solche Ausführungsform. Der Metallstreifen 7 ist parallel zum abgewinkelten Verlauf des Randes 6 des Anpassungsansatzes 5 vorgesehen. Die vier Abwinklungen des Metallstreifens 7 verlaufen hier nicht parallel zueinander, sondern sind im Winkel zueinander angeordnet, so daß die Schenkel 12 und 13 des Klemmteils 10 im Bereich des Metallstreifens in der Erstreckungsrichtung des Klemmteils 10 abnehmende Höhe besitzen. Die Höhe kann dann im frei überkragenden Bereich des Klemmteiles 10 wieder zunehmen.

### BEZUGSZEICHENLISTE

- 1: - Kotflügel
- 2: - Kotflügelfalz
- 3: - Schmutzfänger
- 4: - Lappenhauptkörper
- 5: - Anpassungsansatz
- 6: - Rand
- 7: - Metallstreifen
- 8: - Niet
- 9: - Befestigungsstelle
- 10: - Klemmteil
- 11: - Mittelteil
- 12: - Schenkel
- 13: - Schenkel
- 14: - Durchbrechung
- 15: - Klammerteil
- 16: - Fortsatz
- 17: - Betätigungsschenkel
- 18: - Pfeil
- 19: - Grund
- 20: - Schraube
- 21: - Gewindeschaft
- 22: - Gegengewinde
- 23: - Endbereich
- 24: - Finger
- 25: - Pfeil
- 26: - Pfeil
- 27: - Pfeil
- 28: - Abwinkelung
- 29: - Vorsprung

## Patentansprüche

1. Schmutzfänger für Kraftfahrzeuge, mit einem Lappenhauptkörper (4) aus elastischem Material, an dem ein Anpassungsansatz (5) gebildet ist, an dessen Rand (6) ein Metallstreifen (7) befestigt ist, an dem zwei im Abstand voneinander angeordnete, sich etwa rechtwinklig zur Hauptrichtung des Metallstreifens (7) erstreckende Klemmteile (10) ausgeformt sind, denen den Kotflügelfalz (2) hintergreifende Klammerteile (15) zugeordnet sind, wobei für jede Befestigungsstelle (9) aus Klemmteil (10) und Klammerteil (15) eine das Klemmteil (10) in einer Durchbrechung (14) durchsetzende und in ein Gegengewinde (22) im Klammerteil (15) eingreifende Schraube (20) zur klemmenden Halterung des Schmutzfängers (3) am Kotflügelfalz (2) vorgesehen ist, dadurch gekennzeichnet, daß der Metallstreifen (7) zur Bildung jedes Klemmteils (10) mit einem U-förmigen Querschnitt vierfach abgewinkelt ist, daß das rechtwinklig zur Hauptrichtung des Metallstreifens (7) vorstehende Teil des Klemmteils (10) den U-förmigen Querschnitt fortsetzend zwei frei endende Schenkel (12, 13) aufweist, und daß das Klammerteil (15) an seinem dem Kotflügelfalz (2) abgekehrten Ende einen zwischen die Schenkel (12, 13) des Klemmteils (10) verdrehgesichert eingreifenden und sich am Grund des Klemmteils (10) abstützenden umgebogenen Fortsatz (16) aufweist.

2. Schmutzfänger nach Anspruch 1, dadurch gekennzeichnet, daß der Fortsatz (16) am Klammerteil (15) etwa V-förmig ausgebildet ist und einen frei endenden Betätigungsschenkel (17) aufweist.

3. Schmutzfänger nach Anspruch 1, dadurch gekennzeichnet, daß das Klemmteil (10) einen den Grund des U-förmigen Querschnitts bildenden Mittelteil (11) aufweist, der sich in einer beabstandet zu der Haupterstreckungsebene des Metallstreifens (7) befindlichen Ebene erstreckt.

4. Schmutzfänger nach Anspruch 3, dadurch gekennzeichnet, daß die Durchbrechung (14) für die Schraube (20) im Mittelteil (11) des Klemmteils (10) vorgesehen und als Langloch ausgebildet ist, das sich etwa rechtwinklig zur Hauptrichtung des Metallstreifens erstreckt.

5. Schmutzfänger nach Anspruch 1, dadurch gekennzeichnet, daß das Klammerteil (15) an seinem dem Kotflügelfalz (2) zugekehrten Endbereich (23) quer zur Hauptrichtung des Metallstreifens (7) abgerundete Form aufweist.

6. Schmutzfänger nach Anspruch 1, dadurch gekennzeichnet, daß der Rand (6) des Anpassungsansatzes (5) einen Winkel für die Befestigung des Metallstreifens (7) bildende Vorsprünge (29) aufweist.

7. Schmutzfänger nach Anspruch 1, dadurch gekennzeichnet, daß das Klemmteil (10) rechtwinklig zur Hauptrichtung des Metallstreifens (7) im Bereich des Metallstreifens abnehmende Höhe der Schenkel (12, 13) aufweist.

8. Schmutzfänger nach Anspruch 6 oder 7, dadurch gekennzeichnet, daß das Klammerteil (15) mit seinem dem Kotflügelfalz (2) zugekehrten Endbereich (23) zum Ausgleich des durch die Vorsprünge (29) oder die Abwinkelungen (28) gebildeten Winkels abgewinkelt ist.

9. Schmutzfänger nach Anspruch 1, dadurch gekennzeichnet, daß das Klemmteil (10) in seinem rechtwinklig zur Hauptrichtung des Metallstreifens (7) vorstehenden Bereich eine zunehmende Höhe seiner Schenkel (12, 13) aufweist.

## Claims

1. Mudflap for vehicles with a main body (4) made out of an elastic material on which an adapton edge (5) is formed with a metal strip (7) on its edge (6) on which two clamping elements (10) are formed which are arranged in a distance to each other, which extend almost rectangularly to the main direction of the metal strip (7), to which clamping members (15) are arranged gripping behind the edge of mudguard (2), whereby for each fixing point (9) out of a clamping element (10) and a clamping member (15) one screw (20) for clamping fixing of the mudflap (3) on the edge of mudguard (2) is provided which goes through an opening (14) of the clamping element (10) and which grips into an adapted thread (22) of the clamping member (15), **wherein** the metal strip (7) to form each clamping element (10) with an U-formed cross section is bent four times, the part of the clamping element (10) extending rectangularly to the main direction of the metal strip (7) continues the U-formed cross section has two legs (12, 13) with a free ending, and the clamping member (15) provides a bent extention (16) on its ending opposite to the edge of mudguard (2) which grips protected from twisting between the legs (12, 13) of the clamping element (10) and is supported by the ground of the clamping element (10).

2. Mudflap according to claim 1, **wherein** the extention (16) on the clamping member (15) is about V-shaped and has a free ending actuation lengthening (17).

3. Mudflap according to claim 1, **wherein** the clamping element (10) has a central part (11) which formes the ground of the U-formed cross section which extends in a plane in a distance to the main extetion plane of the metal strip (7).

4. Mudflap according to claim 3, **wherein** the opening (14) for the srew (20) is provided in the cetral part (11) of the clamping element (10) and is formed as a long hole which extends about rectangularly to the main direction of the metal strip.

5. Mudflap according to claim 1, **wherein** the clamping member (15) provides at end area (23) turned to the edge of mudguard (2) a rounded form across to the main direction of the metal strip (7).

6. Mudflap according to claim 1, **wherein** the edge (6) of the adaption edge (5) has an angle for fixing the metal strip (7) forming projections (29).

7. Mudflap according to claim 1, **wherein** the clamping element (10) provides decreasing highth of the legs (12, 13) rectagular to the main direction of the metal strip (7) in the metal strip.

8. Mudflap according to claim 6 or 7, **wherein** the clamping member (15) with its end area (23) turned to the edge of mudguard (2) is bent to equalize the angle formed by the projections (29) or by the bent portions (28).

9. Mudflap according to claim 1, **wherein** the clamping element (10) in its part rectangular to the main direction of the metal strip (7) has an increasing highth of its leg (12, 13).

## Revendications

1. Garde-boue pour véhicules automobiles, comportant un corps principal de bavette (4) en matériau élastique, sur lequel est formé un appendice d'adaptation (5), sur le bord (10) duquel est fixée une bande métallique (7), sur laquelle sont formées deux pièces de serrage (10) espacées l'une de l'autre, s'étendant à peu près à angle droit par rapport à la direction principale de la bande métallique (7), auxquelles sont associées des agrafes (15) passant derrière le pli de l'aile (2), pour chaque point de fixation (9), constitué de la pièce de serrage (10) et de l'agrafe (15), étant prévue une vis (20) traversant la pièce de serrage (10) dans un ajour (14) et s'engageant dans un contre-filetage (22) de l'agrafe (15), pour la fixation par serrage du garde-boue (3) sur le pli de l'aile (2), caractérisé en ce que la bande métallique (7) est coudée quatre fois pour former chaque pièce de serrage (10) avec une section transversale en U, en ce que la partie de la pièce de serrage (10), dépassant à angle droit par rapport à la direction principale de la bande métallique (7), présente, en prolongeant la section transversale en U, deux branches (12, 13) se terminant librement, et en ce que l'agrafe (15) présente, à son extrémité tournée à l'opposé du pli de l'aile (2), un prolongement recourbé (16) s'engageant de manière bloquée en rotation entre les branches (12, 13) de la pièce de serrage (10) et prenant appui contre le fond de la pièce de serrage (10).

2. Garde-boue selon la revendication 1, caractérisé en ce que le prolongement (16) est formé à peu près en V sur l'agrafe (15) et présente une branche d'actionnement (17) se terminant librement.

3. Garde-boue selon la revendication 1, caractérisé en ce que la pièce de serrage (10) présente une partie centrale (11) formant le fond de la section transversale en U, qui s'étend dans un plan éloigné du plan d'extension principale de la bande métallique (7).

4. Garde-boue selon la revendication 3, caractérisé en ce que l'ajour (14) pour la vis (20) est prévu dans la partie centrale (11) de la pièce de serrage (10) et est conformé en trou oblong, qui s'étend à peu près à angle droit par rapport à la direction principale de la bande métallique.

5. Garde-boue selon la revendication 1, caractérisé en ce que l'agrafe (15) présente, dans sa zone d'extrémité (23) tournée vers le pli de l'aile (2), une forme arrondie, transversalement à la direction principale de la bande métallique (7).

6. Garde-boue selon la revendication 1, caractérisé en ce que le bord (6) de l'appendice d'adaptation (5) présente des saillies (29), formant un angle pour la fixation de la bande métallique (7).

7. Garde-boue selon la revendication 1, caractérisé en ce que la pièce de serrage (10) présente, à angle droit par rapport à la direction principale de la bande métallique (7), une hauteur des branches (12, 13), diminuant dans la zone de la bande métallique.

8. Garde-boue selon la revendication 6 ou 7, caractérisé en ce que l'agrafe (15) est coudée, avec sa zone d'extrémité (23) tournée vers le pli de l'aile (2), pour la compensation de l'angle formé par les saillies (29) ou les parties coudées (28).

9. Garde-boue selon la revendication 1, caractérisé en ce que la pièce de serrage (10) présente, dans sa zone dépassant à angle droit par rapport à la direction principale de la bande métallique (7), une hauteur croissante de ses branches (12, 13).
